(19) Europäisches Patentamt
European Patent Office
Office européen des brevets

(11) Veröffentlichungsnummer: **0 254 129 B1**

(12) **EUROPÄISCHE PATENTSCHRIFT**

(45) Veröffentlichungstag der Patentschrift: **18.09.91**

(51) Int. Cl.⁵: **H02P 9/38**, H02P 9/30

(21) Anmeldenummer: **87109820.8**

(22) Anmeldetag: **07.07.87**

(54) **Bürstenloser Synchrongenerator.**

(30) Priorität: **22.07.86 DE 3624729**

(43) Veröffentlichungstag der Anmeldung:
**27.01.88 Patentblatt 88/04**

(45) Bekanntmachung des Hinweises auf die
Patenterteilung:
**18.09.91 Patentblatt 91/38**

(84) Benannte Vertragsstaaten:
**CH DE FR GB IT LI SE**

(56) Entgegenhaltungen:
**EP-A- 0 081 904**
**US-A- 3 671 850**

(73) Patentinhaber: **Siemens Aktiengesellschaft**
**Wittelsbacherplatz 2**
**W-8000 München 2(DE)**

(72) Erfinder: **Stapf, Karl**
**Sulzweg 6**
**W-8745 Ostheim(DE)**

**Beschreibung**

Die Erfindung betrifft einen bürstenlosen Synchrongenerator, der mit einer konstant erregten Erregermaschine gekuppelt ist, deren mittels eines Gleichrichters gleichgerichtete Spannung der Erregerwicklung des Generators zugeführt und in Abhängigkeit von Generatorspannung gesteuert ist.

Ein solcher Generator ist durch die US-A-3 671 850 bekannt. Zur Spannungsregelung wird bei diesem Generator dessen Klemmenspannung als Istwert einem Spannungsregler zugeführt. Das Regelsignal wird mittels eines Senders und Empfängers vom Ständerteil auf den rotierenden Teil der Maschine übertragen. Durch das Regelsignal wird dann ein auf dem rotierenden Teil angeordneter, im Erregerstromkreis der Maschine liegender Gleichrichter gesteuert. Eine derartige Regeleinrichtung ist sehr aufwendig und wird daher nur bei Maschinen großer Leistung eingesetzt.

Durch die EP-A-0 081 904 ist ein selbsterregter, geregelter bürstenloser Synchrongenerator bekannt. Dieser Synchrongenerator besitzt eine Erregermaschine, deren Wicklung durch im Ständer des Synchrongenerators angeordnete Wicklungsteile in Abhängigkeit von der Spannung und dem Laststrom des Synchrongenerators induziert wird. Die induzierte Wicklung der Erregermaschine speist die Erregerwicklung des Synchrongenerators. Damit ist die Erregung des Synchrongenerators von seiner Belastung abhängig. Mittels eines Strom- oder Flußsensors wird eine dem jeweiligen Erregungszustand dieser Erregerwicklung proportionale Steuergröße erzeugt, die einer mit einem Soll-Ist-Wert-Vergleich ausgestatteten Regelautomatik zur Steuerung eines im Stromkreis der Erregerwicklung angeordneten steuerbaren Gleichrichters zugeführt ist. Auf diese Weise wird die Klemmenspannung des Synchrongenerators geregelt.

Bei einem Synchrongenerator mit konstant erregter Erregermaschine ist eine Regelung der Klemmenspannung durch Erfassung des von der Erregermaschine für die Erregerwicklung des Synchrongenerators gelieferten Erregerstromes nicht möglich, da dieser Erregerstrom keinen Bezug zum jeweiligen Belastungszustand des Synchrongenerators hat.

Zur Versorgung von nicht an das öffentliche Netz angeschlossenen Stromverbrauchern oder auch zur Notstromversorgung werden derartige bürstenlose Synchrongeneratoren eingesetzt, wobei der Antrieb des Generators durch eine Verbrennungskraft-Maschine erfolgt. Diese im Inselbetrieb arbeitenden Stromversorgungsaggregate benötigen von Natur aus keine Spannungs- oder Drehzahlregelung. Wegen der kleinen Leistung dieser Aggregate hat man bisher auch auf den Regelaufwand verzichtet. Es hat sich jedoch gezeigt, daß es bei stärkerer Belastung solcher Aggregate doch zu einem störenden Spannungsabfall kommen kann.

Aufgabe der Erfindung ist es, eine entsprechend einfache Regelmöglichkeit zu schaffen, um den störenden Spannungsabfall ausregeln zu können.

Die Lösung der gestellten Aufgabe gelingt nach der Erfindung dadurch, daß im Luftspalt des Synchrongenerators ein Hallsensor angeordnet ist, dessen Hallspannung zur Steuerung der der Erregerwicklung zugeführten Spannung dient. Da die EMK des Synchrongenerators dem Luftspaltfluß proportional ist, lassen sich mittels des Hallsensors Spannungsschwankungen, die durch Belastungsänderungen des Synchrongenerators bedingt sind, erfassen. In Abhängigkeit von der Hallspannung des Hallsensors kann dann die Erregung des Synchrongenerators entsprechend gesteuert und so die Spannung weitgehend konstant gehalten werden.

Zweckmäßigerweise wird die Hallspannung einer einen Soll-Ist-Wert-Vergleich durchführenden Ansteuerelektronik zugeführt, durch die ein im Erregerkreis des Synchrongenerators liegendes Regelglied gesteuert ist.

Dadurch, daß die Versorgungsspannung des Hallsensors an einer über einen Steuergleichrichter an die Erregermaschine angeschlossenen Zenerdiode abgegriffen ist und daß ferner die Spannung der Zenerdiode den Soll-Wert für die Spannungsregelung bildet, wird keinerlei Fremdspannung für die Regelung benötigt, was insbesondere den Inselbetrieb eines solchen Stromversorgungsaggregates ermöglicht.

Da derartige Aggregate der Einfachheit halber nur mit einem Drehzahlregler geringerer Genauigkeit ausgestattet sind, wird der bei stärkerer Belastung eintretende Drehzahlabfall nicht exakt ausgeregelt. Ebenso werden die durch ohmsche und induktive Belastung bedingten Spannungsabfälle nicht berücksichtigt. Die durch Drehzahländerung und Belastung bedingten Spannungsabfälle können zumindest zum Teil dadurch ausgeglichen werden, daß der Hallsensor in Bezug auf die Drehrichtung des Synchrongenerators vor der Polmitte angeordnet ist. Bei Belastung des Synchrongenerators wird der Flußverlauf infolge der Ankerrückwirkung über dem Pol verzerrt und zwar derart, daß bei Generatorbetrieb an der ablaufenden Polkante eine Erhöhung und an der auflaufenden Polkante eine Schwächung des Feldes auftritt. Durch die Anordnung des Hallsensors vor der Polmitte ist dieser einem schwächeren Feld ausgesetzt, so daß der Regelanordnung eine niedrigere Spannung gemeldet und die Erregung des Synchrongenerators entsprechend hoch geregelt wird.

Dadurch, daß der Hallsensor mit einem einstellbaren Abschlußwiderstand beschaltet ist, können die durch die Toleranzen der Maschinenkomponenten und den Einbau des Hallsensors bedingten Einflüsse auf die Regelanordnung ausgeglichen werden. Ferner ist mittels eines solchen Abschlußwiderstandes eine gezielte Istwerteinstellung möglich.

Der Hallsensor kann ebenso wie die übrigen, für die Regelung notwendigen Teile, auf dem rotierenden Teil des Synchrongenerators angeordnet werden. Damit werden keine Schleifringe zur Übertragung von elektrischen Größen von einem feststehenden auf ein rotierendes Teil benötigt.

Die Regelung des Erregerstromes des Synchrongenerators kann mittels einer aus steuerbaren Gleichrichterelementen bestehenden Gleichrichterbrücke oder auch durch ein im Gleichstromkreis der Erregerwicklung angeordnetes steuerbares Halbleiterbauelement erfolgen. Hierfür eignen sich insbesondere Leistungstransistoren.

Anhand eines in der Zeichnung dargestellten Ausführungsbeispieles wird der Anmeldungsgegenstand nachfolgend näher beschrieben. Es zeigt:

Fig. 1    ein elektrisches Schaltschema eines bürstenlosen Synchrongenerators, mit einem über einen Hallsensor gesteuerten Leistungstransistor zur Erregerstromregelung und

Fig. 2    ein elektrisches Schaltbild eines bürstenlosen Synchrongenerators, bei dem die Erregerstromregelung mittels einer gesteuerten Gleichrichterbrücke erfolgt.

Mit 1 ist der feststehende und mit 2 der rotierende Teil eines Synchrongenerators bezeichnet. Der feststehende Teil 1 umfaßt die Ständerwicklung 3 des Synchrongenerators und eine Dauermagnetanordnung 4, welche die Erregung für eine mit dem Synchrongenarator gekuppelte oder in diesem integrierte Erregermaschine liefert. Die induzierte Wicklung 5 der Erregermaschine ist dem rotierenden Teil 2 des Synchrongenerators zugeordnet. An die Wicklung 5 der Erregermaschine ist eine Gleichrichterbrücke 6 mit ihrer Wechselspannungsseite angeschlossen. Mit der Gleichspannungsseite der Gleichrichterbrücke 6 ist die Erregerwicklung 7 des Synchrongenerators über einen Leistungstransistor 11 verbunden. Zu der Erregerwicklung ist eine Freilaufdiode 17 parallelgeschaltet.

Im Luftspalt des Synchrongenerators ist ein Hallsensor 8 vorgesehen. Dieser Hallsensor wird zur Vermeidung von irgendwelchen Schleifringen vorteilhafterweise auf dem rotierenden Teil 2 angeordnet. Die Hallspannung des Hallsensors 8 wird einer Ansteuerelektronik 9 als Ist-Wert zugeführt. Mittels eines an die Hallspannungsanschlüsse des Hallsensors 8 angeschlossenen Anschlußwiderstandes 15 kann ein Abgleich der Hallspannung vorgenommen werden. Der Ansteuerelektronik 9 wird ferner ein Soll-Wert 10 vorgegeben. Durch das Ausgangssignal der Ansteuerelektronik 9 wird der den Erregerstrom der Erregerwicklung 7 regelnde Leistungstransistor 11 gesteuert.

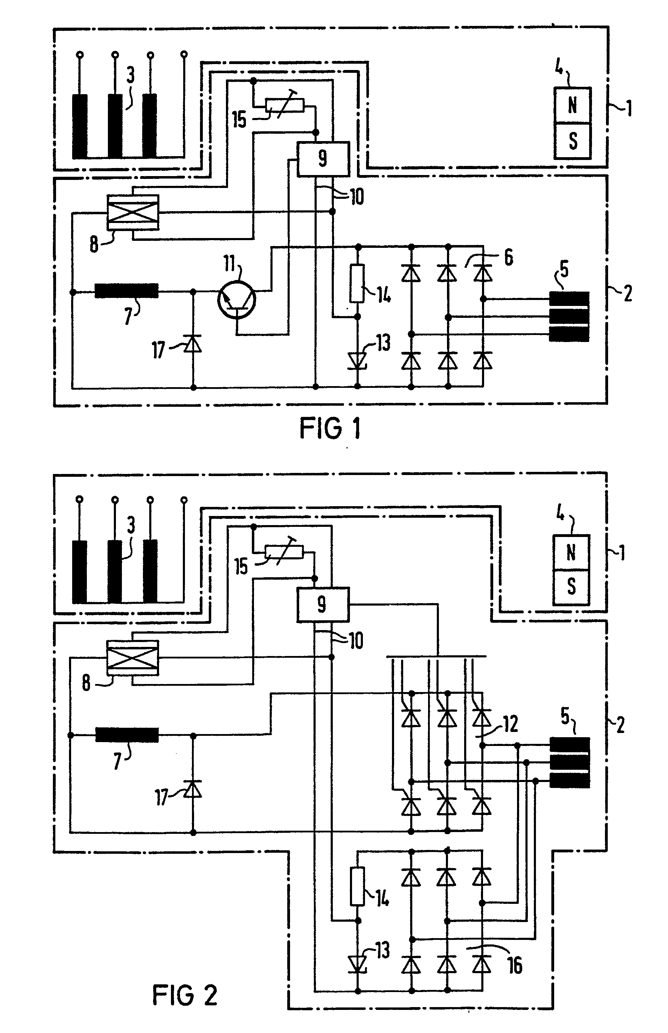

Als Regelglied kann auch eine aus steuerbaren Gleichrichterelementen bestehende Gleichrichterbrücke 12 wie in Fig. 2 dargestellt, vorgesehen werden. Zusätzlich zu der gesteuerten Gleichrichterbrücke 12 ist noch ein Steuergleichrichter 16 an die Wicklung 5 der Erregemaschine angeschlossen.

An den Gleichspannungspolen + und - des Gleichrichters 6 bzw. des Steuergleichrichters 16 liegt die Reihenschaltung einer Zenerdiode 13 und eines Ohm'schen Widerstandes 14. Die an der Zenerdiode 13 abgegriffene Spannung dient als Versorgungsspannung für den Hallsensor 8, der somit eine konstante Versorgungsspannung erhält, so daß seine Hallspannung dem ihn durchsetzenden Fluß proportional ist. Die an der Zenerdiode 13 abgegriffene Spannung wird ferner der Ansteuerelektronik 9 als Soll-Wert 10 zugeführt. Entsprechend dem von der Ansteuerelektronik 9 durchgeführten Soll-Ist-Wert-Vergleich wird der Leistungstransistor 11 bzw. die gesteuerte Gleichrichterbrücke 12 durch die Ansteuerelektronik 9 angesteuert und damit der Strom in der Erregerwicklung 7 geregelt.

Erfolgt die Regelung des Stromes in der Erregerwicklung 7 mittels des steuerbaren Gleichrichterbrücke 12, dann müssen die steuerbaren Gleichrichterelemente dieser Brücke in der richtigen Folge durch die Ansteuerelektronik 9 angesteuert werden. Die Ansteuerelektronik 9 muß in diesem Fall mit einem entsprechenden Stellungsgeber ausgerüstet werden, durch den das Ansteuersignal zum richtigen Zeitpunkt für das entsprechende Gleichrichterelement freigegeben wird. Derartige Stellungsgeber sind allgemein bekannt.

**Patentansprüche**

1.  Bürstenloser Synchrongenerator (1,2), der mit einer konstant erregten Erregermaschine (4,5) gekuppelt ist, deren mittels eines Gleichrichters (6;12) gleichgerichtete Spannung der Erregerwicklung (7) des Synchrongenerators zugeführt und in Abhängigkeit von der Generatorspannung gesteuert ist,
    **dadurch gekennzeichnet,**
    daß im Luftspalt des Synchrongenerators ein Hallsensor (8) angeordnet ist, dessen Hallspannung zur Steuerung der der Erregerwicklung zugeführten Spannung dient.

2.  Synchrongenerator nach Anspruch 1,
    **dadurch gekennzeichnet,**
    daß die Hallspannung einer einen Soll-Ist-Wert-Vergleich durchführenden Ansteuerelektronik (9) zugeführt ist, durch die ein im Erregerkreis des Synchrongenerators liegendes Regelglied (11 bzw. 12) gesteuert ist.

3. Synchrongenerator nach Anspruch 1 oder 2, **dadurch gekennzeichnet,** daß die Versorgungsspannung des Hallsensors (8) an einer über einen Gleichrichter (6 bzw. 16) an die Erregermaschine angeschlossenen Zenerdiode (13) abgegriffen ist.

4. Synchrongenerator nach Anspruch 3, **dadurch gekennzeichnet,** daß die Spannung der Zenerdiode (13) den Soll-Wert (10) für die Spannungsregelung bildet.

5. Synchrongenerator nach einem oder mehreren der vorhergehenden Ansprüche, **dadurch gekennzeichnet,** daß der Hallsensor (8) in Bezug auf die Drehrichtung des Synchrongenerators vor der Polmitte angeordnet ist.

6. Synchrongenerator nach einem oder mehreren der vorhergehenden Ansprüche, **dadurch gekennzeichnet,** daß der Hallsensor (8) auf dem rotierenden Teil (2) des Synchrongenerators angeordnet ist.

7. Synchrongenerator nach einem oder mehreren der Ansprüche 1 bis 6, **dadurch gekennzeichnet,** daß als Regelglied eine aus gesteuerten Gleichrichterelementen bestehende Gleichrichterbrücke (12) vorgesehen ist, deren einzelne Gleichrichterelemente durch die Ansteuerelektronik (9) angesteuert sind.

8. Synchrongenerator nach einem oder mehreren der Ansprüche 1 bis 6, **dadurch gekennzeichnet,** daß das Regelglied ein im Gleichstromkreis der Erregerwicklung (7) des Synchrongenerators angeordnetes, steuerbares Halbleiterbauelement (11) ist.

9. Synchrongenerator nach Anspruch 8, **dadurch gekennzeichnet,** daß das Halbleiterbauelement ein Leistungstransistor (11) ist.

10. Synchrongenerator nach einem oder mehreren der vorhergehenden Ansprüche, **dadurch gekennzeichnet,** daß der Hallsensor (8) mit einem einstellbaren Abschlußwiderstand (15) beschaltet ist.

## Claims

1. Brush-free synchronous generator (1, 2) which is coupled with a constantly energized dynamo (4, 5), the voltage of which, rectified by means of a rectifier (6, 12), is supplied to the exciter winding (7) of the synchronous generator and is controlled in dependence upon the generator voltage, characterized in that in the air gap of the synchronous generator there is arranged a Hall sensor (8), the Hall voltage of which serves to control the voltage supplied to the exciter winding.

2. Synchronous generator according to claim 1, characterized in that the Hall voltage is supplied to control electronics (9) carrying out a comparison of desired value and actual value, by means of which control electronics a regulating element (11 or 12), lying in the exciter circuit of the synchronous generator, is controlled.

3. Synchronous generator according to claim 1 or 2, characterized in that the supply voltage of the Hall sensor (8) is picked up by a Zener diode (13) attached by means of a rectifier (6 or 16) to the exciter machine.

4. Synchronous generator according to claim 3, characterized in that the voltage of the Zener diode (13) forms the desired value (10) for the voltage regulation.

5. Synchronous generator according to one or several of the preceding claims, characterized in that the Hall sensor (8) with reference to the direction of rotation of the synchronous generator is arranged in front of the centre of the pole.

6. Synchronous generator according to one or several of the preceding claims, characterized in that the Hall sensor (8) is arranged on the rotating part (2) of the synchronous generator.

7. Synchronous generator according to one or several of claims 1 to 6, characterized in that as a regulating element there is provided a rectifier bridge (12) consisting of controlled rectifier elements, the individual rectifier elements being controlled by the control electronics (9).

8. Synchronous generator according to one or several of claims 1 to 6, characterized in that the regulating element is a controllable semi-conductor structural element (11) arranged in the direct current circuit of the exciter winding (7) of the synchronous generator.

9. Synchronous generator according to claim 8, characterized in that the semi-conductor structural element is a power transistor (11).

10. Synchronous generator according to one or several of the preceding claims, characterized in that the Hall sensor (8) is wired to an adjustable termination resistance (15).

**Revendications**

1. Générateur synchrone (1,2) sans balais, accouplé à une machine excitatrice (4,5) excitée en permanence et dont la tension, qui est redressée par un redresseur (6;12), est envoyée à l'enroulement d'excitation (7) du générateur synchrone et est commandée en fonction de la tension du générateur, caractérisé par le fait que dans l'entrefer du générateur synchrone est disposé un capteur de Hall (8) dont la tension de Hall sert à commander la tension envoyée à l'enroulement d'excitation.

2. Générateur synchrone suivant la revendication 1, caractérisé par le fait que la tension de Hall est envoyée à un circuit électronique de commande (9), qui réalise une comparaison valeur de consigne-valeur réelle et commande le circuit de régulation (11 ou 12) situé dans le circuit d'excitation du générateur synchrone.

3. Générateur synchrone suivant la revendication 1 ou 2, caractérisé par le fait que la tension d'alimentation du capteur de Hall (8) est prélevée sur une diode Zener (13) raccordée à la machine excitratrice par l'intermédiaire d'un redresseur (6 ou 16).

4. Générateur synchrone suivant la revendication 3, caractérisé par le fait que la tension de la diode Zener (13) forme la valeur de consigne (10) pour la régulation de tension.

5. Générateur synchrone suivant une ou plusieurs des revendications précédentes, caractérisé par le fait que le capteur de Hall (8) est disposé en avant le centre du pôle, dans le sens de rotation du générateur synchrone.

6. Générateur synchrone suivant une ou plusieurs des revendications précédentes, caractérisé par le fait que le capteur de Hall (8) est disposé sur la partie tournante (2) du générateur synchrone.

7. Générateur synchrone suivant une ou plusieurs des revendications 1 à 6, caractérisé par le fait qu'il est prévu, comme circuit de régulation, un pont redresseur (12) constitué par des éléments redresseurs commandés et dont les différents éléments redresseurs sont commandés par le circuit électronique de commande (9).

8. Générateur synchrone suivant une ou plusieurs des revendications 1 à 6, caractérisé par le fait que le circuit de régulation est un composant à semiconducteurs commandable (11), disposé dans le circuit à courant continu de l'enroulement d'excitation (7).

9. Générateur synchrone suivant la revendication 8, caractérisé par le fait que le composant à semiconducteurs est un transistor de puissance (11).

10. Générateur synchrone suivant une ou plusieurs des revendications précédentes, caractérisé par le fait que le capteur de Hall (8) est raccordé à une résistance de terminaison réglable (15).

FIG 1

FIG 2